# EUROPEAN PATENT SPECIFICATION

(11) **EP 1 258 093 B1**
(45) Date of publication and mention of the grant of the patent: **25.01.2006**
(21) Application number: 01911802.5
(22) Date of filing: 22.02.2001
(51) Int. Cl.: H04L 1/00

(54) **METHOD FOR TRANSMITTING DATA IN A RADIO ACCESS NETWORK**
VERFAHREN ZUR DATENÜBERTRAGUNG IN EINEM FUNKZUGRIFFNETZWERK
PROCEDE DE TRANSMISSION DE DONNEES DANS UN RESEAU A ACCES RADIOELECTRIQUE

(30) Priority: 23.02.2000 FI 20000415
(43) Date of publication of application: 20.11.2002
(73) Proprietor: Nokia Corporation, 02150 Espoo (FI)
(72) Inventor: SEBIRE, Benoist, FIN-00530 Helsinki (FI)
(74) Representative: Brax, Matti Juhani
(86) International application number: PCT/FI2001/000183
(87) International publication number: WO 2001/063790

(56) References cited:
- US-A- 4 507 781
- US-A- 5 499 246
- "Reccomendation GSM 05.03, version 3.6.1, Channel Coding" ETSI - RELEASE NOTE, October 1994 (1994-10), pages 1-22, XP002174389

## Description

The invention relates in general to a method and an arrangement for transferring data in the radio access network of a cellular system. The invention relates in particular to using the transmission resource over the radio interface efficiently.

Traditionally telecommunication systems have been used to transmit speech and they have implemented circuit switching. In circuit switching a certain amount of transmission resources is reserved in all the networks through which the connection goes. The transmission resources are most limited usually over radio interface. For example, the radio access networks of cellular systems are typically the bottlenecks of cellular systems. In the radio access network of the Global System for Mobile telecommunications (GSM), for example, a bi-directional circuit switched channel is reserved for each call. The transmission capacity of the bi-direction channel is the same to both directions, and it is chosen, for example, based on the quality of speech that the user requires. In conversation, typically only one of the parties talks at a time, and therefore about half of the reserved resources are not used efficiently.

In the radio access network of the Enhanced Data Rate for GSM Evolution (EDGE), which is an enhanced version of GSM that provides circuit switched and packet switched data transmission at a higher rate than current GSM, it is possible to reserve uni-directional circuit switched connections. In other words, the uplink connections and downlink connections can be reserved independently, and the transmission capacity of two related connections does no have to be the same. Further, the uni-directional connection can be dynamically reserved only when there is speech to transmit. EDGE is under specification at the priority date of this patent application.

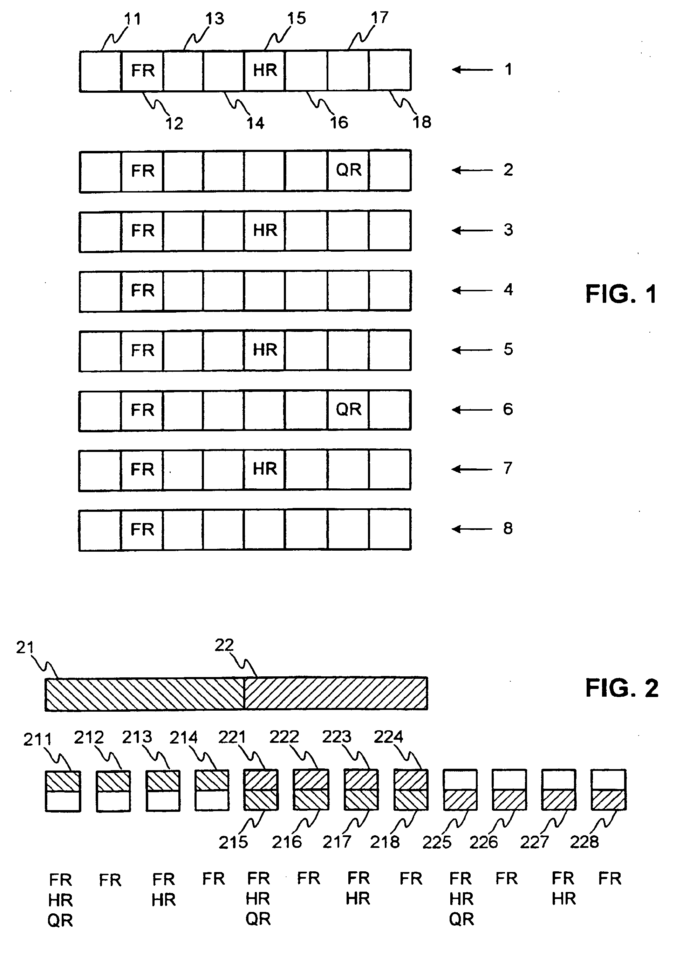

The radio access networks of GSM and EDGE are Time Division Multiple Access (TDMA) systems. In TDMA systems a communication channel consists of a sequence of radio bursts, which are sent in a certain, predetermined time slot in sequential TDMA frames. Figure 1 presents an example of eight TDMA frames 1-8, each consisting of eight time slots 11-18. In circuit switched connections there is usually some specific signaling which takes place each time a circuit-switched connection is set up or torn down.

Figure 1 presents examples of three channels of GERAN (General EDGE Radio Access Network), which supports three different transmission data rates for circuit switched connections. The circuit switched radio access bearers are usually called channels and, for example, in the radio access network of GSM, a channel is specified by the time slot number within a certain TDMA frame sequence. The TDMA frames of a certain sequence (i.e. related to a certain channel) can be transmitted using various frequencies.

For a Full Rate (FR) channel in GERAN, one time slot is reserved in each TDMA frame related to a certain channel. For a Half Rate (HR) channel, one time slot in every other TDMA frame is reserved, and for a Quarter Rate (RQ) channel, one time slot in every fourth TDMA frame is reserved. Typically the reserved time slots are the same in each TDMA frame, similarly as Figure 1 presents.

The physical data transmission over the radio interface takes place using radio bursts, which consists of a certain number of symbols. Each symbol corresponds to a certain number of bits: the exact number of bits depends on the employed modulation scheme. For example, in 8-ary Phase Shift Keying (8PSK) there are eight different symbols and the number of bits per symbol is thus 3, and in Gaussian Minimum Shift Keying (GMSK) each symbol carries one bit. These are examples of modulation schemes that are used in GERAN.

Data to be transmitted over the radio interface is typically channel coded and interleaved before it is mapped on the symbols. Channel coding adds redundancy to the data, and the aim of channel coding is to recover the data even if some occasional transmission errors occurs. Interleaving means, for example, that sequential data blocks are not sent one after other, but in some other order. This way more bursty transmission errors can be tolerated.

In speech applications, the digitized speech is typically compressed using a certain speech coding method before it is transmitted over the radio interface. The amount of coded speech depends on the target speech quality and on the efficiency of the speech coding method. The coded speech is usually transmitted in speech frames, and a speech frame typically corresponds approximately to the duration of four TDMA frames. Within a FR channel 6 speech frames (120ms) correspond to the duration of 26 TDMA frames (24 for speech + 1 for Slow Associated Control CHannel or SACCH + 1 for Idle). The speech frames are channel coded with a suitable channel coding method; the choice of the channel coding method is usually affected by the transmission data rate of the communication channel reserved for the call. For a FR channel the number of bits of a channel coded speech frame is typically equal to or less than the number of bits carried by four radio bursts. Interleaving depth, which means over how many radio bursts a certain coded data frame is mapped, depends typically also on the transmission data rate of the communication channel.

Figure 2 presents schematically diagonal interleaving using two channel coded data blocks 21 and 22 as an example. Let us consider an example, where a FR channel is available and diagonal interleaving with the interleaving depth of 8 bursts is used. The channel coded data block 21 is transmitted using eight radio bursts, which correspond to a certain time slot of the TDMA frame. Certain first symbols/bits of the four first radio bursts (presented in Figure with rectangles 211-214) and certain second symbols of the next four radio bursts (presented in Figure with rectangles 215-218) are used to transmit the channel coded data block 21. The first symbols/bits of then same latter radio bursts, which are used to transmit the channel coded data block 21, are used to transmit part of the channel coded data block 22. The rest of the channel coded data block 22 is transmitted using the second symbols/bits of next four radio bursts. Figure 2 presents only schematically how each radio burst carries the channel coded data blocks. The details of how the bits of the coded data blocks are mapped on the symbols/bits of the radio bursts can be found, for example, in the ETSI (European Telecommunication Standardization Institute) technical specification GSM 0503.

Certain real time applications, such as speech, pose typically very strict delay requirements. If the available channel is a HR channel, then the channel coding is usually selected so that the number of bits of one channel coded speech frame can be transmitted using two radio bursts. Consequently, the interleaving depth for diagonal interleaving is typically four radio bursts. The radio bursts marked with HR in Figure 2 present a situation, where a HR channel and the interleaving depth of four radio bursts are used. Similarly, radio bursts marked with QR in Figure 2 correspond to a situation, where a QR channel and the interleaving depth of two radio bursts are used.

Discontinuous transmission (DTX) means that speech frames are transmitted only when a respective party of the call speaks. In typical conversations, the parties talk in turns and about half of the transmission capacity can be saved by employing DTX. A sequence of speech frames corresponds to each talk spurt in a conversation. When the channel coded speech frames are interleaved diagonally, in the beginning and end of the transmission of a each sequence of speech frames, there is a certain number of radio bursts that are only partly used. For example, for FR channel and for diagonal interleaving over eight bursts, the number of partly unused radio bursts is eight: four first radio bursts and four last radio bursts related to a talk spurt. Figure 2 illustrates this situation: if the channel coded data frames 21 and 22 correspond to a talk spurt, the white rectangles indicate the unused parts, or in other words, wasted payload of radio bursts. This payload is reserved for the connection, but cannot be efficiently used by the connection.

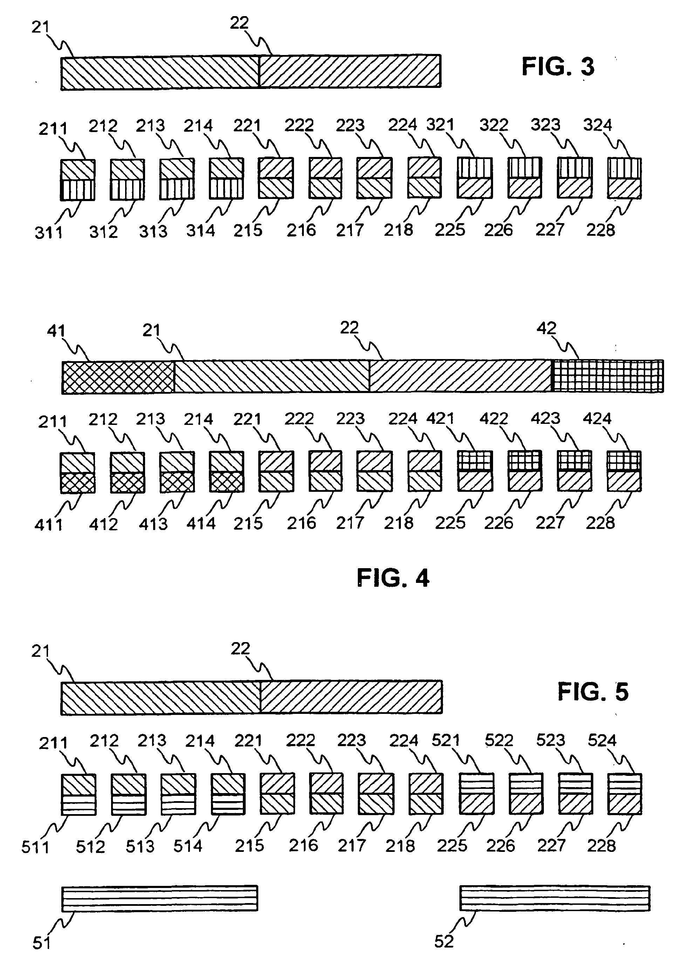

Certain speech coding methods use the wasted payload of the radio bursts in the beginning and end of each talk spurt to transmit certain information about the speech coding. Adaptive Multi-rate (AMR) coding is a speech coding method, where the digitized speech can be coded using various modes. The receiver has to know, which AMR mode is in use, to be able to decode the speech frame and re-construct the digitized speech. When AMR coding and DTX are used, in the beginning of each talk spurt, an ONSET frame, which indicates the AMR mode of the first speech frame in the talk spurt, is transmitted. This ONSET frame is transmitted using the first radio bursts related to the talk spurt, more precisely the symbols/bits of the first radio bursts that are not carrying the first channel coded speech frame of the talk spurt. In Figure 3, the ONSET frame is thus transmitted using the parts 311-314 of the radio bursts. Figure 3 presents an example, where a FR channel and diagonal interleaving over eight radio bursts are used. Furthermore, for the receiver to be able to detect the end of a talk spurt, a SID_FIRST frame is transmitted in the end of a talk spurt. This frame is transmitted using the last radio bursts related to the talk spurt, more precisely using those symbols/bits (parts 321-324 in Figure 3) of the last radio bursts that are not carrying the last channel coded speech frame.

The ONSET and SID_FIRST frames are channel coded before they are transmitted. Even when the strongest channel coding method (in other words, the method producing largest amount of channel coded data), only part of the wasted payload can be utilized. The rest of the payload is typically filled with a certain repeating sequence, which does not carry any information to the receiver.

There is a proposal to eliminate the wasted payload in the beginning and end of each talk/data spurt. Figure 4 illustrates this proposal. Consider a talk/data spurt that can be compressed to a certain number of data frames. In the example presented in Figure 4, the talk/data spurt is compressed to four data frames. Of these data frames, the middle ones are channel coded and interleaved as generally specified for the connection. In Figure 4, the second and third channel coded data frames 21 and 22 are interleaved diagonally over eight radio bursts, similarly as the channel coded data frames 21 and 22 in Figures 2 and 3. The first data frame is channel coded using a channel coding rate half of the specified rate, and the resulting number bits in the first channel coded data frame 41 can be transmitted using the part (411-414) of the first four radio bursts that is not used to carry the second channel coded speech frame 21. The last data frame of a talk spurt is channel coded similarly, and interleaved over the last four radio bursts (421-424).

The problem with this proposal is that the link level performance the first and last data frames of a talk/data spurt is reduced. The weaker channel coding and smaller interleaving depth makes these data frames more vulnerable to transmission errors. Especially when the data to be transmitted is speech, this can lead to front-end clipping and reduce the perceived quality of the speech. Furthermore, when AMR speech coding is used, using this proposal it is not possible to send the ONSET and SID_FIRST frames, which the receiver needs for reconstructing the digitized speech.

The object of the invention is to present a method for transmitting data corresponding to a data spurt, where the payload of the radio bursts over which the channel coded data spurt is interleaved, is efficiently used. A further object is to present such a method, where each of the data frame related to a certain data spurt is channel coded and interleaved in a similar matter. A further object is to present a method, which allows the transmission of information needed in the processing of the data frames.

The objects of the invention are achieved by transmitting in the partly unused first and last radio bursts, over which the data frames corresponding to a certain data spurt are interleaved, some embedded information.

A method according to the invention is a method for transmitting certain first data and certain second data, which method comprises the steps of:
- channel coding the first data resulting in coded first data,
- interleaving a first part of each piece of coded first data over a certain first part of certain first radio bursts and a second part of each piece of coded first data over a certain second part of certain second radio bursts, where the first part is different from the second part,
- transmitting the first part of the first piece of coded first data using certain third radio bursts, which are the first radio bursts related to the first piece of coded first data,
- transmitting the second part of the last piece of coded first data using the second part of certain fourth radio bursts, which are the second radio bursts related to the last piece of coded first data, and the method is characterized in that it further comprises the step of transmitting said second data using an otherwise unused subpart of the second part of the third radio bursts and/or an otherwise unused subpart of the first part of the fourth radio bursts.

In a method according to the invention there is certain first data, for example a sequence of speech frames corresponding to a certain talk spurt, is channel coded. The coded first data, for example channel coded speech frames, is interleaved diagonally over a certain number of radio bursts. The radio bursts belong to the supporting a circuit switched connection, which is established for the transmission of the first data. The interleaving is typically done so that the coded first data is processed piece by piece, for example one channel coded speech frame at a time. Certain first symbols or bits of a certain number radio bursts are used to transmit certain part of a piece of coded data and the rest of the piece of coded data is transmitted using certain other radio bursts, using different symbols or bits than are used in those radio bursts that carry the first part of the piece of coded data.

Each piece of coded data, for example, a channel coded speech frame, is transmitted using two groups of radio bursts: certain first radio bursts and certain second radio bursts. Considering the first piece of coded data corresponding to a data spurt, the whole payload of the second radio bursts is utilized in the transmission of the first data, because they are used to transmit both part of the first piece of coded data and part of the second piece of coded data. Certain part of the payload of the first radio bursts used to transmit the first piece of coded data, however, is not completely used to transmit the first data. The same is true for a certain last radio bursts over which the last piece of coded data is interleaved and whose payload is not completely used in the transmission of the last piece of coded data.

The method according to the invention is characterized in that embedded data is transmitted using the otherwise unused part of the first radio bursts related to a certain data spurt and/or the otherwise unused part of the last radio bursts related to a certain data spurt. Term embedded data refers in here to data that is not the actual output of the application producing the first data and that is transmitted using radio bursts that are reserved for the first data. The embedded data transmitted in these radio bursts can be, for example, some systems information to be transmitted between a mobile station and the radio access network. Measurements reports of the quality of the received signal, transmission power control information or timing advance information are examples of such system information. This kind of system information is typically sent quite often and does not require large amounts of information to be transmitted at a time. One advantage of the invention is that the embedded information can be transmitted without reserving any additional radio bursts for it and the payload of the radio bursts reserved for the transmission of the first data is efficiently used.

In a preferred embodiment of the invention, the embedded data transmitted in the otherwise unused part of the radio bursts is related to the protocols using which the first data is transmitted between the endpoints of the connection. Header stripping is a known technique to reduce the amount of overhead of packet data. If the speech frames, for example, are to be transmitted between a mobile station and another endpoint by encapsulating them to various protocol packets within each other, it is advantageous to transmit only the relevant parts of the packet headers and the payload of the innermost protocol packets. After the speech frames are transmitted over the radio access network, a network element can construct the data frames and encapsulate them to protocol packets having the same header information as the original protocol packets in the transmitting end of the connection.

The use of the otherwise unused part of the radio bursts related to a certain talk spurt, for example, allows the transmission of the residual information resulting from a header stripping using the same radio bursts as the payload of the protocol packets. The information needed to construct the protocol headers is therefore present at the same time as the payload of the protocol packets.

If the application producing the first data, for example a speech coder, needs to transmit some information to the corresponding application in the receiving end, this information is prioritized over any embedded data. In many cases the information sent between applications is some parameter values, and some part of the first or last radio bursts related to, for example, a certain talk spurt is still available for transmitting embedded information.

A transmitting arrangement according to the invention is an arrangement, which comprises
- means for channel coding certain first data,
- means for interleaving a first part of each piece of coded first data over a certain first part of certain first radio bursts and a second part of each piece of coded first data over a certain second part of certain second radio bursts, where the first part is different from the second part, and
- means for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data, and which is characterized in that the transmitting arrangement further comprises means for mapping certain second data using an otherwise unused subpart of the second part of the third radio bursts and/or an otherwise unused subpart of the first part of the fourth radio bursts.

The invention also relates to a receiving arrangement, which comprises
- means for receiving certain channel coded and interleaved first data transmitted using certain radio bursts and
- means for decoding the channel coded first data, and which is characterized in that it comprises means for extracting certain second data transmitted using a certain subparts of the radio bursts, over which subparts of the radio bursts the channel coded first data is not interleaved.

A mobile station according to the invention is a mobile station, which comprises
- means for channel coding certain first data,
- means for interleaving a first part of each piece of coded first data over a certain first part of certain first radio bursts and a second part of each piece of coded first data over a certain second part of certain second radio bursts, where the first part is different from the second part,
- means for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data,
- means for receiving certain channel coded and interleaved first data transmitted using certain radio bursts, and
- means for decoding the channel coded first data, and it is characterized in that it further comprises
- means for mapping certain second data using an otherwise unused subpart of the second part of the third radio bursts and/or an otherwise unused subpart of the first part of the fourth radio bursts and
- means for extracting certain second data transmitted using a certain subparts of the radio bursts, over which subparts of the radio bursts the channel coded first data is not interleaved.

The invention relates also to a network element, which comprises
- means for channel coding certain first data,
- means for interleaving a first part of each piece of coded first data over a certain first part of certain first radio bursts and a second part of each piece of coded first data over a certain second part of certain second radio bursts, where the first part is different from the second part,
- means for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data,
- means for receiving certain channel coded and interleaved first data transmitted using certain radio bursts, and
- means for decoding the channel coded first data, and which is characterized in that it further comprises
- means for mapping certain second data using an otherwise unused subpart of the second part of the third radio bursts and/or an otherwise unused subpart of the first part of the fourth radio bursts and
- means for extracting certain second data transmitted using a certain subparts of the radio bursts, over which subparts of the radio bursts the channel coded first data is not interleaved.

The appended dependent claims describe some preferred embodiments of the invention. Features specified in one dependent claims may be further combined with features specified in another dependent claim to produce further embodiments of the invention.

The invention will now be described more in detail with reference to the preferred embodiments by the way of example and to the accompanying drawings where
- Figure 1: shows some known examples of channel allocations in frames,
- Figure 2: shows schematically a known example of diagonal interleaving,
- Figure 3: shows an example of using a FR channel and diagonal interleaving over eight radio bursts,
- Figure 4: shows a known proposal to eliminate the wasted payload in the beginning and end of each talk/data spurt,
- Figure 5: shows schematically an embedded associated channel according to a first preferred embodiment of the invention,
- Figure 6: shows schematically an embedded associated channel according to a second preferred embodiment of the invention,
- Figure 7: illustrates the transmission of embedded data according to a third preferred embodiment of the invention,
- Figure 8: shows a flowchart of a method for transmitting embedded data on an embedded associated channel according to the invention and
- Figure 9: shows an example of a transmitting arrangement and a receiving arrangement according to the invention.

Above in conjunction with the description of the prior art reference was made to Figures 1-4. The same reference numerals are used for corresponding parts in the figures.

Figure 5 present schematically an embedded associated channel according to a first preferred embodiment of the invention. The radio bursts presented in Figure 5 with rectangles 211-218, 221-228, 511-514 and 521-524 are reserved for the transmission of the channel coded data blocks 21 and 22. These channel coded data blocks are diagonally interleaved of the reserved radio bursts, as discussed in detail in connection with the description of the prior art. The interleaving leaves unused the parts 511-514 of the first radio bursts related to the first data block and the parts 521-524 of the last radio bursts. As discussed in connection with the description of the prior art, the number of partly unused radio bursts depends on the interleaving length and on the transmission rate of the channel. Furthermore, the modulation scheme affects the amount of data that can be transmitted using the partly unused radio bursts.

The unused part of the radio bursts related to, for example, a certain talk spurt, can be used to transmit embedded information according to the invention. The unused part of the radio bursts can be called an embedded associated channel. For example, in GERAN using a Full Rate channel and interleaving depth of eight radio bursts, the transmission capacity of the embedded associated channel is 456 bits for GMSK modulation and 1368 bits for the 8PSK modulation per each data spurt. The stealing symbols have been taken into account in this calculation. For HR channel and diagonal interleaving with interleaving depth of four radio bursts, the capacity per data spurt is half of the numbers cited above, and for QR channel and diagonal interleaving with interleaving depth of two radio bursts, the capacity per data spurt is a quarter of the numbers cited above.

If we consider the FR channel, interleaving depth of eight radio bursts, and GMSK modulation as an example, it is possible to transmit together with each data spurt 228 bits in the beginning of a talk spurt (rectangular 51 in Figure 5) and 228 bits in the end of a talk spurt (rectangular 52 in Figure 5). These 456 bits can be all used to carry, for example, data related to certain measurements, or it is possible to handle them as two logically separate embedded associated channels. The embedded associated channel formed by the partly unused radio bursts in the beginning of a data spurt can carry, for example, measurement results to/from a mobile station, and the other embedded associated channel, formed by the partly unused radio bursts in the end of a data spurt, may carry, for example, power control information. Measurements results describing the quality of the received radio signal and power control commands are important for the proper function of a radio access network, and they are typically sent quite often. Timing advance information and various acknowledgements are other examples of information that needs to be sent over the radio access network frequently.

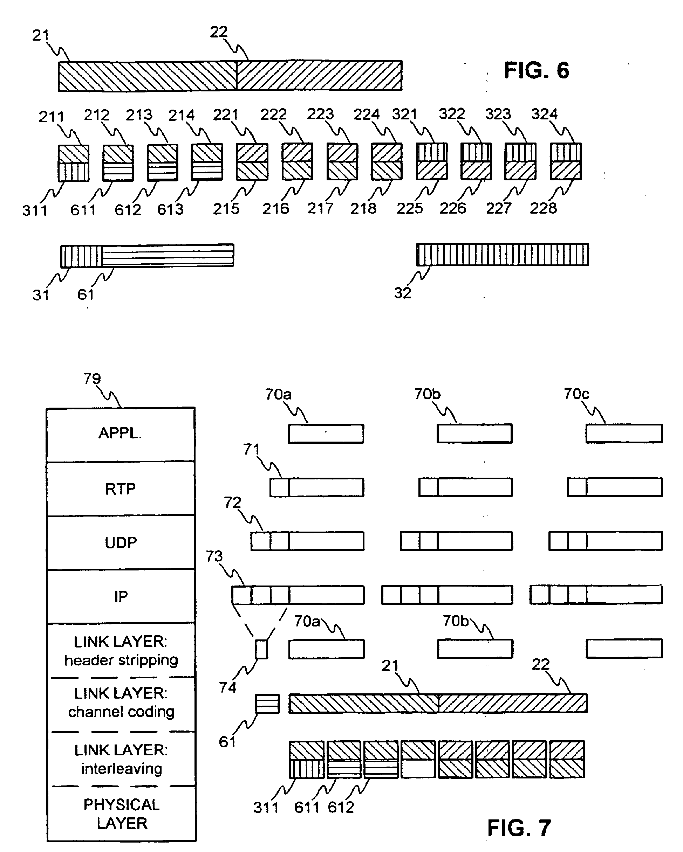

Figure 6 present schematically an embedded associated channel according to a second preferred embodiment of the invention, where certain data related to the application producing the data spurt is transmitted using the same radio bursts as the data spurt. Consider, for example, an AMR speech coder, which is used in discontinuous transmission mode. As discussed in connection with the description of the prior art, in the beginning of each speech spurt an ONSET frame 31 is transmitted and in the end of each speech spurt a SID_FIRST frame 32 is transmitted.

The ONSET frame is typically channel coded, and the amount of resulting channel coded data is at maximum 16 bits. This channel coded ONSET frame can be carried, for example, using only the first radio burst related to the speech spurt, as presented in Figure 6 with rectangular 311. Conventionally the rest of the unused payload (611-613) is filled with a certain repeating sequence, which carries no information. It is possible to transmit other data instead of the repeating sequence. This leaves, again considering a GERAN FR channel, interleaving depth of 8 radio bursts and GSMK modulation as an example, 228 -16 = 208 bits in the beginning of each data spurt for an embedded associated channel. The channel coded SID_FIRST frame 32 typically fills the payload (321-324) of the last radio bursts related to a speech spurt.

The application producing the data spurt and some related parameters that need to be transmitted is not restricted to speech coders; it may be any application producing data in spurts. A video coding application is one example of such applications.

Figure 7 illustrates the transmission of embedded data according to a third preferred embodiment of the invention. The left part of Figure 7 presents the protocol stack related to a certain application. The uppermost layer of the protocol stack is the application producing a data spurt to be transmitted. The data spurt may consist of a certain number of data blocks 70a, 70b and 70c, as presented in Figure 7.

Consider an example, where the data spurt is transmitted between the endpoints of a connection in data packets. The data blocks 70a, 70b and 70c produced by the application can be encapsulated to data packets of certain transmission protocols. The Realtime Transmission Protocol (RTP) is an example of a packet data protocol that suits for applications, which do not tolerate delays. The data block 70a, 70b and 70c are encapsulated to RTP protocol packets by placing the data blocks themselves to the payload of the packets and by adding suitable headers 71 to the data blocks. Some protocols may need some information also in the end of the protocol packet, but in Figure 7 each transmission protocol adds its own headers to the data packets delivered by an upper protocol layer.

The RTP data packets may be transmitted using User Datagram Protocol (UDP), which may be run on Internet Protocol (IP). UDP and IP add to the data packets their own headers 72 and 73. The data packet delivered to a link layer protocol therefore typically consists of the original payload and many headers. The link layer protocol may perform header stripping: the protocol headers typically contain various fields, whose content can be concluded, for example, from certain parameters exchanged in the set-up phase of a connection, whose content does not change from packet to packet. The result of the header stripping is called header stripping residue, and it is the information that needs to be transmitted for a certain packet or group of packets to allow the receiving end to construct the packet headers again. In Figure 7 this header stripping residue is presented with the rectangular 74. The header stripping can be performed on each data packet similarly, or it may be performed, for example, on the first data packet 70a and then the content of the headers of the next data packets is determined using the information of the headers of the first data packet.

Figure 7 presents an example, where the header stripping residue of the first data packet is channel coded in the link layer, and the resulting channel coded information 61 is interleaved on the first radio bursts 611, 612 related to a certain data spurt. As Figure 7 presents, it is possible that the first radio burst carries some application related information 311.

For the protocol combination RTP/UDP/IP the header stripping result typically contains at least the sequence number (SN) of the RTP packet, the time stamp (TS) of the RTP packet and the marker (M) bit of the RTP packet. It is possible that only a certain offset of these needs to transmitted for updating. Information related to the UDP and IP headers can be determined straightforwardly after the first UDP/IP packets of the connection have been transmitted to the receiving end. Once the header stripping residue 74 and the payload of the data packets 70a, 70b and 70b are transmitted over the radio access network, a network element on the other side of the radio access network can reconstruct the RTP/UDP/IP packets using the header stripping residue and the transmitted payloads. Typically the protocol packets are transmitted without the headers over the radio interface, and the network element reconstructing the headers and protocol packet can be, for example, either a mobile station or a base station controller (BSC), depending on the transmission direction. Especially in a receiving mobile station, which typically does not forward the data packets to other network elements, the reconstruction of headers does not have to mean that a data structure corresponding to the header is constructed explicitly. It maybe enough that the header stripping residue and the payload of the data packet is forwarded via the IP/UDP protocol layer to RTP layer. In the IP/UDP layers, for example, only some counters related to the IP/UDP protocol packet sequence number may be incremented.

The length of RTP SN is 32 bits, the length of the RTP TS is 16 bits, and the marker is one bit. This means that the amount of header stripping information that needs to be transmitted in the beginning of each data spurt is 39 bits, if only the header stripping residue of the first data packet of the data spurt is transmitted. The header stripping residue is typically channel coded, and the amount of channel coded header stripping residue is typically less than 80 bits. The number of bits in the first four/two/one radio bursts, corresponding to a GERAN FR/HR/QR channel and the interleaving depth of 8/4/2 radio bursts, not used by the channel coded and interleaved data blocks is 228/114/57 bits. If an AMR coder is used and the channel coded ONSET frame (16 bits) is sent, it is still possible to send the header stripping residue of the first RTP/UDP/IP packet in the case of a FR and HR channel. If a speech coder or other application that produces the data blocks does not require the transmission of any parameters, then the header stripping residue of the first RTP/UDP/IP packet can be sent also in a QR channel using the embedded channel formed by the first and last radio bursts related to each data spurt. When a GERAN FR or HR channel is used in the data transmission, then it is possible to transmit, for example, also the RTP SN, RTP TS and M bit of the last RTP packet related to a certain data spurt. This information can be transmitted using the available payload of the last radio bursts related to a data spurt. If only an offset value is transmitted, even more transmitting alternatives come into question.

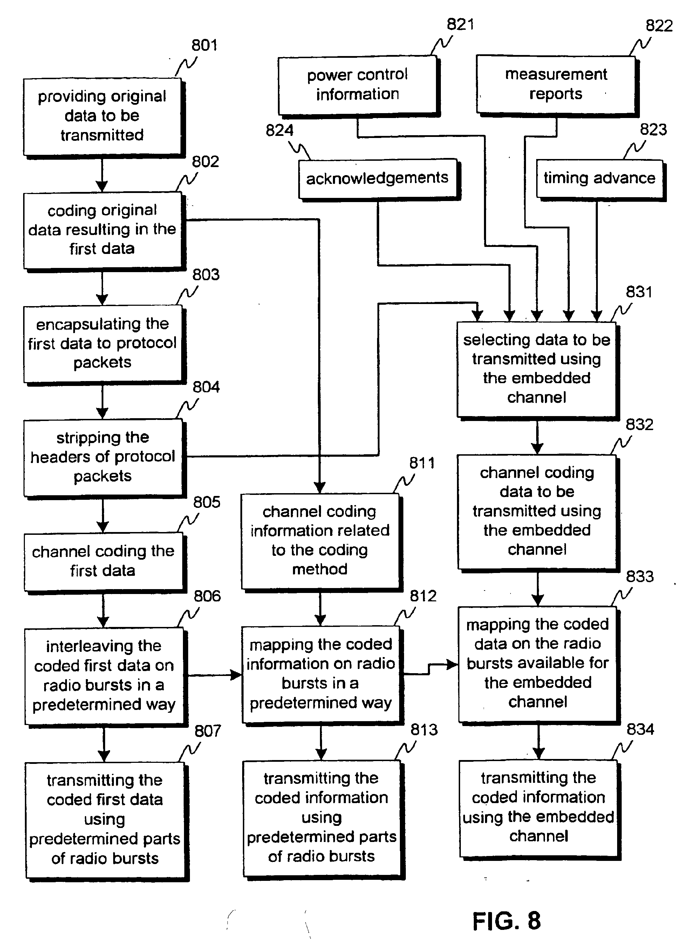

Figure 8 presents a flowchart of a method for transmitting embedded data on an embedded associated channel according to the invention. In step 801 the original data, for which the circuit switched connection is reserved, is provided. This data can be, for example, digitized speech. In step 802 the original data is processed, typically compressed in order to use the transmission resources over the radio interface efficiently. When the original data is digitized speech, the compression is called encoding. The compressed data may be encapsulated into protocol packets in step 803, for example, similarly as Figure 7 presents. Thereafter the protocol headers can be stripped, resulting in header stripping residues in step 804. The data to be transmitted is channel coded in step 805, and interleaved over a certain number of radio bursts in step 806. In step 807 the actual transmission of the channel coded interleaved data takes place.

It is possible that the data compression application, for example a speech coder, produces in addition to the compressed data other parameters to be transmitted. In Figure 8 it is illustrated, how these parameters are output to step 811, where the channel coding of the parameters takes place. In step 812 the channel coded parameters are mapped to such parts of the radio bursts that are not used for the transmission of the compressed data. In step 813 the channel coded parameters are transmitted using same radio bursts that carry the compressed data related to a data spurt.

Same radio bursts can further be used for the transmission of embedded data. The embedded data may be the header stripping residues from step 804, or it may be power control information 821, measurement reports 822, timing advance information 823 or various acknowledgements 824. In step 831 the embedded is selected, and the embedded data is channel coded in step 832. In step 833 the channel coded embedded data is mapped on such parts of the radio bursts that are not occupied by the compressed data, for which the radio bursts are actually reserved, or by parameters related to the application. In step 834 the channel coded embedded data is transmitted using same radio bursts that carry the compressed data related to a data spurt.

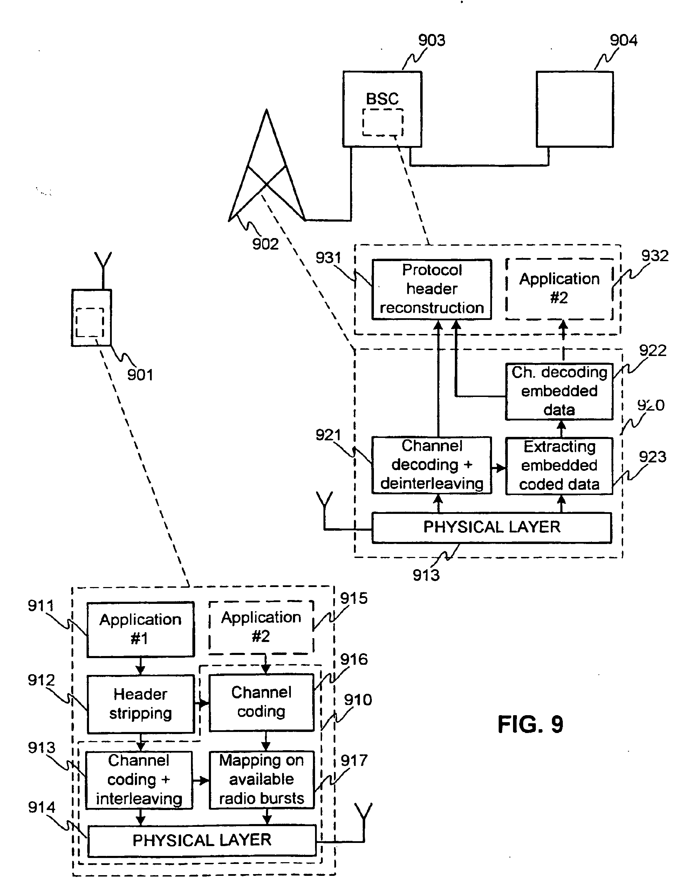

Figure 9 presents an example of a transmitting arrangement 910 and a receiving arrangement 920 according to the invention. A mobile station 901 according to the invention comprises a first application 911, which produces data to be transmitted using a certain reserved circuit switched connection in the uplink direction. An entity 913, typically implemented in the link layer protocol, is responsible for the channel coding and interleaving of the data. The physical layer 914 of the protocol stack is responsible for the radio transmission to a base station (BS) 902. The mobile station may also comprise a second application 915, which produces data that can be embedded to the data produced by the first application during the transmission over the radio interface. It is also possible that there is a header stripping entity 911, typically a part of the link layer protocol, that produces header stripping residues to be transmitted. The embedded data is channel coded (block 916) and mapped on the available radio bursts (block 917). The blocks 916 and 917are typically implemented in the link layer protocol. The block 917 needs as an input at least information about the channel rate and interleaving length of the reserved circuit switched channel. The transmitting arrangement according to the invention comprises the channel coding and interleaving block 913, a radio transmission block 914 and the mapping block 917.

The radio signal transmitted by the mobile station 901 is typically received by a base station 902. The base station typically deinterleaves and decodes the channel coded data it receives (block 921 in Figure 9). A base station according to the invention has in addition block 923, which is responsible for extracting the embedded channel coded data, and block 922, which is responsible for the decoding of the channel coded embedded data. Blocks 921, 922 and 923 are typically implemented in the link layer protocol. The receiving arrangement 920 according to the invention comprises a radio receiving block 914; the channel coding and interleaving block 921 and a block 923 responsible for the extraction of the embedded data.

The actual data, for which the circuit switched connection is reserved, and the embedded data are transmitted further typically to a base station controller (BSC) in the radio access network. This data transmission can be implemented as typical circuit switched data transmission between a BS and BSC, and the detail of this data transmission are not illustrated in Figure 9. In the base station controller there can be a corresponding second application 932, which receives the embedded data. If the embedded data is header stripping residues, the protocol header reconstruction can take place in the BSC (block 931). Thereafter the reconstructed protocol packet can be transmitted further.

For data transmission in the downlink direction, the receiving arrangement 920 is implemented in a mobile station and the transmitting arrangement 910 is implemented in the network elements of the radio access network. In general, both the receiving and the transmitting arrangements are implemented both in a mobile station and in a network element of the radio access network according to the invention.

The term "cellular system" refers generally to any telecommunications system which enables a wireless communication connection between a mobile station and the fixed parts of the system when the user of the mobile station is moving within the service area of the system. The majority of mobile telecommunications systems in use at the time of the filing of this patent application belong to the second generation of such systems, a well-known example being the GSM system. However, the invention also applies to the next or third generation of mobile telecommunications systems, such as a system known as the UMTS (Universal Mobile Telecommunications System) which currently undergoes standardization.

GERAN is used as an example of a system where a method according to the invention can be implemented. The methods according to the invention are not restricted to those used in GSM or in EDGE; a method according to the invention can be applied also in other radio networks.

## Claims

1. A method for use in a radio access network of a cellular system for transmitting certain first data and certain second data, which method comprises the steps of:
- channel coding the first data resulting in coded first data,
- interleaving a first part of each piece of coded first data over a certain first part of certain first radio bursts and a second part of each piece of coded first data over a certain second part of certain second radio bursts, where the first part is different from the second part,
- transmitting the first part of the first piece of coded first data using certain third radio bursts, which are the first radio bursts related to the first piece of coded first data, and
- transmitting the second part of the last piece of coded first data using the second part of certain fourth radio bursts, which are the second radio bursts related to the last piece of coded first data,
**characterized in that** the method further comprises the step of transmitting said second data using an otherwise unused subpart of the second part of the third radio bursts and/or an otherwise unused subpart of the first part of the fourth radio bursts.

2. A method according to claim 1, **characterized in that** it further comprises the step of
- coding a certain amount of original data to produce the first data using a certain coding method, and
- transmitting certain third data related to the coding method using a first subpart of the second part of the third radio bursts and/or a first subpart of the first part of the fourth radio bursts, and where the second data is transmitted using a second subpart, which is left unused by said third data, of the second part of the third radio bursts and/or a second subpart, which is left unused by said third data, of the first part of the fourth radio bursts.

3. A method according to claim 1, **characterized in that** the first data is encoded speech.

4. A method according to claim 1, **characterized in that** the first data is encoded video.

5. A method according to claim 1, **characterized in that** it further comprises the steps of:
- transmitting in the otherwise unused subpart of the second part of the third radio bursts at least one identifier related to the first data,
- receiving the coded first data and the identifier transmitted using radio bursts,
- uncoding the coded first data, resulting in uncoded first data,
- assembling uncoded first data to payloads of a sequence of data packets according to a certain protocol, and
- constructing header(s) for the data packet(s) belonging to the sequence of data packets using the identifier.

6. A method according to claim 5, **characterized in that** it further comprises the steps of:
- assembling the first data to payloads of a first sequence of data packets according to said protocol and
- assigning to each data packet of the first sequence of data packets a sequence number and a time stamp, and **in that**
- the sequence number and the time stamp of the first data packet of the first sequence of data packets are transmitted using the otherwise unused subpart of the second part of the first radio bursts,
- the uncoded first data is assembled to payloads of a second sequence of data packets in a similar manner than the first data is assembled to payloads of the first sequence of data packets, and
- the sequence number and time stamp of the first data packet of the first sequence of data packets are used in constructing the header(s) for the data packet(s) belonging to the second sequence of data packets.

7. A method according to claim 6, **characterized in that** it further comprises the step of transmitting the sequence number and the time stamp of the last data packet of the first sequence of data packets in the otherwise unused subpart of the first part of the fourth radio bursts.

8. A method according to claim 5, **characterized in that** it further comprises the steps of:
- assembling the first data to payloads of a first sequence of data packets according to said protocol and
- assigning to each data packet of the first sequence of data packets an offset value of at least one of a sequence number and a time stamp, and **in that**
- the offset values are transmitted using the otherwise unused subpart of the second part of the first radio bursts,
- the uncoded first data is assembled to payloads of a second sequence of data packets in a similar manner than the first data is assembled to payloads of the first sequence of data packets, and
- the offset values are used in constructing the header(s) for the data packet(s) belonging to the second sequence of data packets.

9. A method according to claim 5, **characterized in that** the protocol is the Realtime Transport Protocol.

10. A method according to claim 9, **characterized in that** the first data is encoded speech.

11. A method according to claim 1, **characterized in that** the number of first radio bursts and the number of second radio bursts is the same.

12. A method according to claim 11, **characterized in that** the number of first radio bursts is one of the following: one, two or four.

13. A transmitting arrangement (910), which comprises
- means (913) for channel coding certain first data,
- means (913) for interleaving a first part of each piece of coded first data over a certain first part of certain first radio bursts and a second part of each piece of coded first data over a certain second part of certain second radio bursts, where the first part is different from the second part, and
- means (914) for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data, **characterized in that** the transmitting arrangement further comprises means (917) for mapping certain second data using an otherwise unused subpart of the second part of the third radio bursts and/or an otherwise unused subpart of the first part of the fourth radio bursts.

14. A receiving arrangement (920), which comprises
- means (914) for receiving certain channel coded and interleaved first data transmitted using certain radio bursts and
- means (921) for decoding the channel coded first data, **characterized in that** it comprises means (923) for extracting certain second data transmitted using a certain subparts of the radio bursts, over which subparts of the radio bursts the channel coded first data is not interleaved.

15. A mobile station (901) for use in a radio access network of a cellular system, which comprises
- means (913) for channel coding certain first data,
- means (913) for interleaving a first part of each piece of coded first data over a certain first part of certain first radio bursts and a second part of each piece of coded first data over a certain second part of certain second radio bursts, where the first part is different from the second part,
- means (914) for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data,
- means (914) for receiving certain channel coded and interleaved first data transmitted using certain radio bursts, and
- means (921) for decoding the channel coded first data, **characterized in that** it further comprises
- means (917) for mapping certain second data using an otherwise unused subpart of the second part of the third radio bursts and/or an otherwise unused subpart of the first part of the fourth radio bursts and
- means (923) for extracting certain second data transmitted using a certain subparts of the radio bursts, over which subparts of the radio bursts the channel coded first data is not interleaved.

16. A mobile station according to claim 15, **characterized in that** it is a mobile station of the EDGE cellular system.

17. A base station (902) for use in a radio access network of a cellular system, which comprises
- means (913) for channel coding certain first data,
- means (913) for interleaving a first part of each piece of coded first data over a certain first part of certain first radio bursts and a second part of each piece of coded first data over a certain second part of certain second radio bursts, where the first part is different from the second part,
- means (914) for transmitting the first part of the first piece of coded first data using certain third radio bursts, which are the first radio bursts related to the first piece of coded first data, and for transmitting the second part of the last piece of coded first data using the second part of certain fourth radio bursts, which are the second radio bursts related to the last piece of coded first data,
- means (914) for receiving certain channel coded and interleaved first data transmitted using certain radio bursts, and
- means (921) for decoding the channel coded first data, **characterized in that** it further comprises
- means (917) for mapping certain second data using an otherwise unused subpart of the second part of the third radio bursts and/or an otherwise unused subpart of the first part of the fourth radio bursts and
- means (923) for extracting certain second data transmitted using a certain subparts of the radio bursts, over which subparts of the radio bursts the channel coded first data is not interleaved.

18. A network element according to claim 17, **characterized in that** it is a network element of the radio access network of the EDGE system.

## Patentansprüche

1. Verfahren zur Verwendung in einem Funkanschlussnetz eines Zellularsystems zum Senden von bestimmten ersten Daten und bestimmten zweiten Daten, wobei das Verfahren die folgenden Schritte umfasst:
- Kanalcodieren der ersten Daten, was zu codierten ersten Daten führt,
- Schachteln eines ersten Teils jedes Datenelements von codierten ersten Daten über einen bestimmten ersten Teil von bestimmten ersten Funkbursts und eines zweiten Teils jedes Datenelements von codierten ersten Daten über einen bestimmten zweiten Teil von bestimmten zweiten Funkbursts, wobei der erste Teil sich von dem zweiten Teil unterscheidet,
- Senden des ersten Teils des ersten Datenelements von codierten ersten Daten unter Verwendung von bestimmten dritten Funkbursts, welche die ersten Funkbursts sind, die mit dem ersten Datenelement von codierten ersten Daten in Beziehung stehen, und
- Senden des zweiten Teils des letzten Datenelements von codierten ersten Daten unter Verwendung des zweiten Teils von bestimmten vierten Funkbursts, welche die zweiten Funkbursts sind, die mit dem letzten Datenelement von codierten ersten Daten in Beziehung stehen,
**dadurch gekennzeichnet, dass** das Verfahren ferner den Schritt des Sendens der zweiten Daten unter Verwendung eines sonst unbenutzten Nebenteils des zweiten Teil der dritten Funkbursts und/oder eines sonst unbenutzten Nebenteils des ersten Teils der vierten Funkbursts umfasst.

2. Verfahren nach Anspruch 1, **dadurch gekennzeichnet, dass** es ferner die folgenden Schritte umfasst:
- Codieren einer bestimmten Menge von Originaldaten, um die ersten Daten zu erzeugen, unter Verwendung eines bestimmtes Codierverfahren, und
- Senden von bestimmten dritten Daten, die mit dem Codierverfahren in Beziehung stehen, unter Verwendung eines ersten Nebenteils des zweiten Teils der dritten Funkbursts und/oder eines ersten Nebenteils des ersten Teils der vierten Funkbursts, und wobei die zweiten Daten unter Verwendung eines zweiten Nebenteils, der durch die dritten Daten unbenutzt gelassen wird, des zweiten Teils der dritten Funkbursts und/oder eines zweiten Nebenteils, der durch die dritten Daten unbenutzt gelassen wird, des ersten Teils der vierten Funkbursts gesendet werden.

3. Verfahren nach Anspruch 1, **dadurch gekennzeichnet, dass** es sich bei den ersten Daten um verschlüsselte Sprache handelt.

4. Verfahren nach Anspruch 1, **dadurch gekennzeichnet, dass** es sich bei den ersten Daten um ein verschlüsseltes Video handelt.

5. Verfahren nach Anspruch 1, **dadurch gekennzeichnet, dass** es ferner die folgenden Schritte umfasst:
- Senden wenigstens einer Kennzeichnung, die mit den ersten Daten in Beziehung steht, in dem sonst unbenutzten Nebenteil des zweiten Teils der dritten Funkbursts,
- Empfangen der codierten ersten Daten und der Kennzeichnung, die unter Verwendung von Funkbursts gesendet wurden,
- Entschlüsseln der codierten ersten Daten, was zu entschlüsselten ersten Daten führt,
- Zusammenstellen der entschlüsselten ersten Daten zu Nutzdaten einer Folge von Datenpaketen gemäß einem bestimmten Protokoll, und
- Aufbauen eines Kopfs oder von Köpfen für das Datenpaket oder die Datenpakete, welche zu der Folge von Datenpaketen gehören, welche die Kennzeichnung verwenden.

6. Verfahren nach Anspruch 5, **dadurch gekennzeichnet, dass** es ferner die folgenden Schritte umfasst:
- Zusammenstellen der ersten Daten zu Nutzdaten einer ersten Folge von Datenpaketen gemäß dem Protokoll und
- Zuordnen einer Reihenfolgennummer und eines Zeitstempels zu jedem Datenpaket der ersten Folge von Datenpaketen, und **dadurch**, dass
- die Reihenfolgennummer und der Zeitstempel des ersten Datenpakets der ersten Folge von Datenpaketen unter Verwendung des sonst unbenutzten Nebenteils des zweiten Teils der ersten Funkbursts gesendet werden,
- die entschlüsselten ersten Daten auf eine ähnliche Weise zu Nutzdaten einer zweiten Folge von Datenpaketen zusammengestellt werden, wie die ersten Daten zu Nutzdaten der ersten Folge von Datenpaketen zusammengestellt werden, und
- die Reihenfolgennummer und der Zeitstempel des ersten Datenpakets der ersten Folge von Datenpaketen beim Aufbauen des Kopfs oder der Köpfe für das Datenpaket oder die Datenpakete verwendet werden, die zu der zweiten Folge von Datenpaketen gehören.

7. Verfahren nach Anspruch 6, **dadurch gekennzeichnet, dass** es ferner den Schritt des Sendens der Reihenfolgennummer und des Zeitstempels des letzten Datenpakets der ersten Folge von Datenpaketen in dem sonst unbenutzten Nebenteil des ersten Teils der vierten Funkbursts umfasst.

8. Verfahren nach Anspruch 5, **dadurch gekennzeichnet, dass** es ferner die folgenden Schritte umfasst:
- Zusammenstellen der ersten Daten zu Nutzdaten einer ersten Folge von Datenpaketen gemäß dem Protokoll, und
- Zuordnen eines Versatzwerts wenigstens einer Reihenfolgennummer oder eines Zeitstempels zu jedem Datenpaket der ersten Folge von Datenpaketen, und **dadurch**, dass
- die Versatzwerte unter Verwendung des sonst unbenutzten Nebenteils des zweiten Teils der ersten Funkbursts gesendet werden,
- die entschlüsselten ersten Daten auf eine ähnliche Weise zu Nutzdaten einer zweiten Folge von Datenpaketen zusammengestellt werden, wie die ersten Daten zu Nutzdaten der ersten Folge von Datenpaketen zusammengestellt werden, und
- die Versatzwerte beim Aufbauen des Kopfs oder der Köpfe für das Datenpaket oder die Datenpakete verwendet werden, welche zu der zweiten Folge von Datenpaketen gehören.

9. Verfahren nach Anspruch 5, **dadurch gekennzeichnet, dass** es sich bei dem Protokoll um das Echtzeitsignalübertragungsprotokoll handelt.

10. Verfahren nach Anspruch 9, **dadurch gekennzeichnet, dass** es sich bei den ersten Daten um verschlüsselte Sprache handelt.

11. Verfahren nach Anspruch 1, **dadurch gekennzeichnet, dass** die Anzahl der ersten Funkbursts und die Anzahl der zweiten Funkbursts gleich sind.

12. Verfahren nach Anspruch 11, **dadurch gekennzeichnet, dass** die Anzahl der ersten Funkbursts eine der folgenden ist: eins, zwei oder vier.

13. Sendeanordnung (910), welche umfasst:
- Mittel (913) zum Kanalcodieren von bestimmten ersten Daten,
- Mittel (913) zum Schachteln eines ersten Teils jedes Datenelements von codierten ersten Daten über einen bestimmten ersten Teil von bestimmten ersten Funkbursts und eines zweiten Teils jedes Datenelements von codierten ersten Daten über einen bestimmten zweiten Teil von bestimmten zweiten Funkbursts, wobei der erste Teil sich vom zweiten Teil unterscheidet,
- Mittel (914) zum Senden der ersten Teils des ersten Datenelements von codierten ersten Daten unter Verwendung von bestimmten dritten Funkbursts, welche die ersten Funkbursts sind, die mit dem ersten Datenelement von codierten ersten Daten in Beziehung stehen, und zum Senden des zweiten Teils des letzten Datenelements von codierten ersten Daten unter Verwendung des zweiten Teils von bestimmten vierten Funkbursts, welche die zweiten Funkbursts sind, die mit dem letzten Datenelement von codierten ersten Daten in Beziehung stehen, **dadurch gekennzeichnet, dass** die Sendeanordnung ferner Mittel (917) zum Abbilden von bestimmten zweiten Daten unter Verwendung eines sonst unbenutzten Nebenteils des zweiten Teils der dritten Funkbursts und/oder eines sonst unbenutzten Nebenteils des ersten Teils der vierten Funkbursts umfasst.

14. Empfangsanordnung (920), welche umfasst:
- Mittel (914) zum Empfangen von bestimmten kanalcodierten und verschachtelten ersten Daten, welche unter Verwendung von bestimmten Funkbursts gesendet wurden, und
- Mittel (921) zum Decodieren der kanalcodierten ersten Daten, **dadurch gekennzeichnet, dass** es Mittel (923) zum Extrahieren von bestimmten zweiten Daten umfasst, welche unter Verwendung von bestimmten Nebenteilen der Funkbursts gesendet wurden, über welche Nebenteile der Funkbursts die kanalcodierten ersten Daten nicht geschachtelt sind.

15. Mobilstation (901) zur Verwendung in einem Funkanschlussnetz eines Zellularsystems, welche umfasst:
- Mittel (913) zum Kanalcodieren von bestimmten ersten Daten,
- Mittel (913) zum Schachteln eines ersten Teils jedes Datenelements von codierten ersten Daten über einen bestimmten ersten Teil von bestimmten ersten Funkbursts und eines zweiten Teils jedes Datenelements von codierten ersten Daten über einen bestimmten zweiten Teil von bestimmten zweiten Funkbursts, wobei der erste Teil sich vom zweiten Teil unterscheidet,
- Mittel (914) zum Senden der ersten Teils des ersten Datenelements von codierten ersten Daten unter Verwendung von bestimmten dritten Funkbursts, welche die ersten Funkbursts sind, die mit dem ersten Datenelement von codierten ersten Daten in Beziehung stehen, und zum Senden des zweiten Teils des letzten Datenelements von codierten ersten Daten unter Verwendung des zweiten Teils von bestimmten vierten Funkbursts, welche die zweiten Funkbursts sind, die mit dem letzten Datenelement von codierten ersten Daten in Beziehung stehen,
- Mittel (914) zum Empfangen von bestimmten kanalcodierten und verschachtelten ersten Daten, welche unter Verwendung von bestimmten Funkbursts gesendet wurden, und
- Mittel (921) zum Decodieren der kanalcodierten ersten Daten, **dadurch gekennzeichnet, dass** es ferner umfasst:
- Mittel (917) zum Abbilden von bestimmten zweiten Daten unter Verwendung eines sonst unbenutzten Nebenteils des zweiten Teils der dritten Funkbursts und/oder eines sonst unbenutzten Nebenteils des ersten Teils der vierten Funkbursts, und
- Mittel (923) zum Extrahieren von bestimmten zweiten Daten, welche unter Verwendung von bestimmten Nebenteilen der Funkbursts gesendet wurden, über welche Nebenteile der Funkbursts die kanalcodierten ersten Daten nicht geschachtelt sind.

16. Mobilstation nach Anspruch 15, **dadurch gekennzeichnet, dass** es sich dabei um eine Mobilstation des EDGE-Zellularsystems handelt.

17. Basisstation (902) zur Verwendung in einem Funkanschlussnetz eines Zellularsystems, welche umfasst:
- Mittel (913) zum Kanalcodieren von bestimmten ersten Daten,
- Mittel (913) zum Schachteln eines ersten Teils jedes Datenelements von codierten ersten Daten über einen bestimmten ersten Teil von bestimmten ersten Funkbursts und eines zweiten Teils jedes Datenelements von codierten ersten Daten über einen bestimmten zweiten Teil von bestimmten zweiten Funkbursts, wobei der erste Teil sich vom zweiten Teil unterscheidet,
- Mittel (914) zum Senden der ersten Teils des ersten Datenelements von codierten ersten Daten unter Verwendung von bestimmten dritten Funkbursts, welche die ersten Funkbursts sind, die mit dem ersten Datenelement von codierten ersten Daten in Beziehung stehen, und zum Senden des zweiten Teils des letzten Datenelements von codierten ersten Daten unter Verwendung des zweiten Teils von bestimmten vierten Funkbursts, welche die zweiten Funkbursts sind, die mit dem letzten Datenelement von codierten ersten Daten in Beziehung stehen,
- Mittel (914) zum Empfangen von bestimmten kanalcodierten und verschachtelten ersten Daten, welche unter Verwendung von bestimmten Funkbursts gesendet wurden, und
- Mittel (921) zum Decodieren der kanalcodierten ersten Daten, **dadurch gekennzeichnet, dass** es ferner umfasst:
- Mittel (917) zum Abbilden von bestimmten zweiten Daten unter Verwendung eines sonst unbenutzten Nebenteils des zweiten Teils der dritten Funkbursts und/oder eines sonst unbenutzten Nebenteils des ersten Teils der vierten Funkbursts, und
- Mittel (923) zum Extrahieren von bestimmten zweiten Daten, welche unter Verwendung von bestimmten Nebenteilen der Funkbursts gesendet wurden, über welche Nebenteile der Funkbursts die kanalcodierten ersten Daten nicht geschachtelt sind.

18. Netzelement nach Anspruch 17, **dadurch gekennzeichnet, dass** es sich dabei um ein Netzelement des Funkanschlussnetzes des EDGE-Systems handelt.

## Revendications

1. Procédé destiné à une utilisation dans un réseau d'accès sans fil d'un système cellulaire pour transmettre certaines premières données et certaines secondes données, lequel procédé comprend les étapes consistant à :
- procéder à un codage de canal des premières données conduisant aux premières données codées,
- entrelacer une première partie de chaque pièce des premières données codées sur une certaine première partie de certaines premières salves radio et une seconde partie de chaque pièce de premières données codées sur une certaine seconde partie de certaines secondes salves radio, où la première partie est différente de la seconde partie,
- transmettre la première partie de la première pièce de premières données codées à l'aide de certaines troisièmes salves radio, qui sont les premières salves radio relatives à la première pièce des premières données codées, et
- transmettre la seconde partie de la dernière pièce de premières données codées à l'aide de la seconde partie de certaines quatrièmes salves radio, qui sont les secondes salves radio relatives à la dernière pièce de premières données codées,
**caractérisé en ce que** le procédé comprend en outre l'étape consistant à transmettre lesdites secondes données à l'aide d'une sous-partie sans cela inutilisée de la seconde partie des troisièmes salves radio et/ou d'une sous-partie sans cela inutilisée de la première partie des quatrièmes salves radio.

2. Procédé selon la revendication 1, **caractérisé en ce qu'**il comprend en outre les étapes consistant à :
- coder une certaine quantité de données originales pour produire les premières données à l'aide d'un certain procédé de codage, et
- transmettre certaines troisièmes données relatives au procédé de codage à l'aide d'une première sous-partie de la seconde partie des troisièmes salves radio et/ou une première sous-partie de la première partie des quatrièmes salves radio, et où les secondes données sont transmises à l'aide d'une seconde sous-partie, laquelle est laissée inutilisée par lesdites troisièmes données, de la seconde partie des troisièmes salves radio et/ou une seconde sous-partie, laquelle est laissée inutilisée par lesdites troisièmes données, de la première partie des quatrièmes salves radio.

3. Procédé selon la revendication 1, **caractérisé en ce que** les premières données sont de la parole codée.

4. Procédé selon la revendication 1, **caractérisé en ce que** les premières données sont de la vidéo codée.

5. Procédé selon la revendication 1, **caractérisé en ce qu'**il comprend en outre les étapes consistant à :
- transmettre dans la sous-partie sans cela inutilisée de la seconde partie des troisièmes salves radio au moins un identificateur relatif aux premières données,
- recevoir les premières données codées et l'identificateur transmis à l'aide de salves radio,
- décoder les premières données codées, ce qui conduit aux premières données non codées,
- assembler les premières données non codées à des données utiles d'une séquence de paquets de données selon un certain protocole, et
- construire un et/ou des en-têtes pour le et/ou les paquets de données appartenant à la séquence de paquets de données à l'aide de l'identificateur.

6. Procédé selon la revendication 5, **caractérisé en ce qu'**il comprend en outre les étapes consistant à :
- assembler les premières données aux données utiles d'une première séquence de paquets de données selon ledit protocole, et
- assigner à chaque paquet de données de la première séquence de paquets de données, un numéro de séquence et un horodateur, et **en ce que**
- le numéro de séquence et l'horodateur du premier paquet de données de la première séquence de paquets de données sont transmis à l'aide de la sous-partie sans cela inutilisée de la seconde partie des premières salves radio,
- les premières données non codées sont assemblées aux données utiles d'une seconde séquence de paquets de données d'une manière similaire à celle dont les premières données sont assemblées aux données utiles de la première séquence de paquets de données, et
- le numéro de séquence et l'horodateur du premier paquet de données de la première séquence de paquets de données sont utilisés pour construire le et/ou les en-têtes du et/ou des paquets de données appartenant à la seconde séquence de paquets de données.

7. Procédé selon la revendication 6, **caractérisé en ce qu'**il comprend en outre l'étape consistant à transmettre le numéro de séquence et l'horodateur du dernier paquet de données de la première séquence de paquets de données dans la sous-partie sans cela inutilisée de la première partie des quatrièmes salves radio.

8. Procédé selon la revendication 5, **caractérisé en ce qu'**il comprend en outre les étapes consistant à :
- assembler les premières données aux données utiles d'une première séquence de paquets de données selon ledit protocole, et
- assigner à chaque paquet de données de la première séquence de paquets de données une valeur de décalage d'au moins un parmi un numéro de séquence et un horodateur, et **en ce que**
- les valeurs de décalage sont transmises à l'aide de la sous-partie sans cela inutilisée de la seconde partie des premières salves radio,
- les premières données non codées sont assemblées aux données utiles d'une seconde séquence de paquets de données d'une manière similaire à celle dont les premières données sont assemblées aux données utiles de la première séquence de paquets de données, et
- les valeurs de décalage sont utilisées pour construire le et/ou les en-têtes du et/ou des paquets de données appartenant à la seconde séquence de paquets de données.

9. Procédé selon la revendication 5, **caractérisé en ce que** le protocole est le Protocole de Transport en Temps Réel.

10. Procédé selon la revendication 9, **caractérisé en ce que** les premières données sont de la parole codée.

11. Procédé selon la revendication 1, **caractérisé en ce que** le nombre de premières salves radio et le nombre de secondes salves radio est le même.

12. Procédé selon la revendication 11, **caractérisé en ce que** le nombre de premières salves radio est égal à un des nombres suivant : un, deux ou quatre.

13. Arrangement de transmission (910) qui comprend :
- un moyen (913) pour procéder à un codage de canal de certaines premières données,
- un moyen (913) pour entrelacer une première partie de chaque pièce des premières données codées sur une certaine première partie de certaines premières salves radio et une seconde partie de chaque pièce de premières données codées sur une certaine seconde partie de certaines secondes salves radio, où la première partie est différente de la seconde partie,
- un moyen (914) pour transmettre la première partie de la première pièce de premières données codées à l'aide de certaines troisièmes salves radio, qui sont les premières salves radio relatives à la première pièce de premières données codées, et pour transmettre la seconde partie de la dernière pièce de premières données codées à l'aide de la seconde partie de certaines quatrièmes salves radio, qui sont les secondes salves radio relatives à la dernière pièce de premières données codées, **caractérisé en ce que** l'arrangement de transmission comprend en outre un moyen (917) pour mapper certaines secondes données à l'aide d'une sous-partie sans cela inutilisée de la seconde partie des troisièmes salves radio et/ou d'une sous-partie sans cela inutilisée de la première partie des quatrièmes salves radio.

14. Arrangement de réception (920) qui comprend :
- un moyen (914) pour recevoir certaines premières données, ayant subi un codage de canal et étant entrelacées, transmises à l'aide de certaines salves radio, et
- un moyen (921) pour décoder les premières données ayant subi un codage de canal, **caractérisé en ce qu'**il comprend un moyen (923) pour extraire certaines secondes données transmises à l'aide de certaines sous-parties des salves radio, sur lesquelles sous-parties des salves radio, les premières données ayant subi un codage de canal ne sont pas entrelacées.

15. Station mobile (901), destinée à une utilisation dans un réseau d'accès sans fil d'un système cellulaire, qui comprend :
- un moyen (913) pour procéder à un codage de canal de certaines premières données,
- un moyen (913) pour entrelacer une première partie de chaque pièce des premières données codées sur une certaine première partie de certaines premières salves radio et une seconde partie de chaque pièce de premières données codées sur une certaine seconde partie de certaines secondes salves radio, où la première partie est différente de la seconde partie,
- un moyen (914) pour transmettre la première partie de la première pièce de premières données codées à l'aide de certaines troisièmes salves radio, qui sont les premières salves radio relatives à la première pièce de premières données codées, et pour transmettre la seconde partie de la dernière pièce de premières données codées à l'aide de la seconde partie de certaines quatrièmes salves radio, qui sont les secondes salves radio relatives à la dernière pièce de premières données codées,
- un moyen (914) pour recevoir certaines premières données ayant subi un codage de canal et étant entrelacées transmises à l'aide de certaines salves radio, et
- un moyen (921) pour décoder les premières données ayant subi un codage de canal, **caractérisé en ce qu'**il comprend en outre
- un moyen (917) pour mapper certaines secondes données à l'aide d'une sous-partie sans cela inutilisée de la seconde partie des troisièmes salves radio et/ou d'une sous-partie sans cela inutilisée de la première partie des quatrièmes salves radio, et
- un moyen (923) pour extraire certaines secondes données transmises à l'aide de certaines sous-parties des salves radio, sur lesquelles sous-parties des salves radio, les premières données ayant subi un codage de canal ne sont pas entrelacées.

16. Station mobile selon la revendication 15, **caractérisée en ce qu'**il s'agit d'une station mobile du système cellulaire EDGE.

17. Station de base (902), destinée à une utilisation dans un réseau d'accès sans fil d'un système cellulaire, qui comprend :
- un moyen (913) pour procéder à un codage de canal de certaines premières données,
- un moyen (913) pour entrelacer une première partie de chaque pièce des premières données codées sur une certaine première partie de certaines premières salves radio et une seconde partie de chaque pièce de premières données codées sur une certaine seconde partie de certaines secondes salves radio, où la première partie est différente de la seconde partie,
- un moyen (914) pour transmettre la première partie de la première pièce de premières données codées à l'aide de certaines troisièmes salves radio, qui sont les premières salves radio relatives à la première pièce de premières données codées, et pour transmettre la seconde partie de la dernière pièce de premières données codées à l'aide de la seconde partie de certaines quatrièmes salves radio, qui sont les secondes salves radio relatives à la dernière pièce de premières données codées,
- un moyen (914) pour recevoir certaines premières données, ayant subi un codage de canal et étant entrelacées, transmises à l'aide de certaines salves radio, et
- un moyen (921) pour décoder les premières données ayant subi un codage de canal, **caractérisé en ce qu'**il comprend en outre
- un moyen (917) pour mapper certaines secondes données à l'aide d'une sous-partie sans cela inutilisée de la seconde partie des troisièmes salves radio et/ou d'une sous-partie sans cela inutilisée de la première partie des quatrièmes salves radio, et
- un moyen (923) pour extraire certaines secondes données transmises à l'aide de certaines sous-parties des salves radio, sur lesquelles sous-parties des salves radio, les premières données ayant subi un codage de canal ne sont pas entrelacées.

18. Elément de réseau selon la revendication 17, **caractérisé en ce qu'**il s'agit d'un élément de réseau du réseau d'accès sans fil du système EDGE.
